(19) Europäisches Patentamt

European Patent Office

Office européen des brevets

(11) Veröffentlichungsnummer: **0 313 903 B1**

(12) **EUROPÄISCHE PATENTSCHRIFT**

(45) Veröffentlichungstag der Patentschrift: **01.04.92**

(51) Int. Cl.5: **G01V 1/00**, G01H 1/12, A01M 31/00

(21) Anmeldenummer: **88116727.4**

(22) Anmeldetag: **08.10.88**

Die Akte enthält technische Angaben, die nach dem Eingang der Anmeldung eingereicht wurden und die nicht in dieser Patentschrift enthalten sind.

(54) **Verfahren zur Erkennung der Anwesenheit von in einem festen Substrat, vorzugsweise Holz lebenden Insekten und/oder -larven.**

(30) Priorität: **28.10.87 DE 3736515**

(43) Veröffentlichungstag der Anmeldung:
**03.05.89 Patentblatt 89/18**

(45) Bekanntmachung des Hinweises auf die Patenterteilung:
**01.04.92 Patentblatt 92/14**

(84) Benannte Vertragsstaaten:
**AT BE CH DE ES FR GB GR IT LI LU NL SE**

(56) Entgegenhaltungen:
DE-A- 2 313 833
US-A- 4 671 114

(73) Patentinhaber: **DESOWAG Materialschutz GmbH**
**Rossstrasse 76 Postfach 32 02 20**
**W-4000 Düsseldorf 30(DE)**

(72) Erfinder: **Pallaske, Michael, Dr.**
**Adolf-Kolping-Strasse 22**
**W-4152 Kempen 1(DE)**

(74) Vertreter: **Seiler, Siegfried**
**c/o DEUTSCHE SOLVAY-WERKE GmbH Langhansstrasse 6 Postfach 11 02 70**
**W-5650 Solingen 11(DE)**

**Beschreibung**

Die Erfindung betrifft ein Verfahren und eine Vorrichtung zur Erkennung der Anwesenheit von in einem festen Substrat, vorzugsweise Holz lebenden Insekten und/oder -larven, wobei deren spezifisches Verhalten (Verhaltensmuster) erforscht wird.

Im Holz lebende Insekten und/oder Insektenlarven richten in Nutzholz und Kunstgegenständen z.T. erhebliche Schaden an. Eine frühzeitige Feststellung von Schädlingsbefall im Holz ist durch das Fehlen effektiver zerstörungsfrei arbeitender Prüfverfahren ebenso erschwert wie die Feststellung der Wirksamkeit von Bekämpfungsmaßnahmen. Die mit langen Expositionszeiten der Prüftiere verbundenen Normvorschriften zur Bestimmung der Wirksamkeit von Holzschutzmitteln dienen in der Regel auch als - zeitintensive - Grundlage der Prüfung von neuen Wirkstoffen im Vorfeld der Produktion; auch hier fehlen Prüfverfahren, mit denen Verhaltensänderungen der Prüftiere schnell und zuverlässig nachgewiesen werden können.

Eine Bestimmung des Verhaltens von im Holz lebenden Insekten (Insektenlarven) erfolgt in der industriellen Praxis gemäß den Normen DIN EN 20, DIN EN 21, DIN EN 22 und DIN EN 47. Hier wird über die Anzahl der überlebenden Versuchstiere auf Verhaltensänderungen geschlossen; weiterhin lassen die Normen Beobachtungen mit Röntgengeräten zu. In der biologischen Grundlagenforschung werden seit Erfindung des Kohlemikrophons wiederholt Geräte eingesetzt, die die von holzlebenden Insekten (Insektenlarven) erzeugten Geräusche hörbar machen oder unspezifisch aufzeichnen (A.E.EMMERSON und R.C.SIMPSON 1929 in Science, 1929, Vol. 69, Seite 648 - 649).

Die oben aufgeführten DIN-Verfahren zur Bestimmung von Verhltensänderungen im Holz lebender Insekten (Insektenlarven) erfordern zum Teil sehr lange Expositionszeiten der Prüftiere (je nch Tierart zwischen 6 und 52 Wochen) und erlauben dabei keine gesicherten Aussagen über den zeitlichen Verlauf von Verhaltenänderungen; eine eindeutige Bestimmung des aktuellen Verhaltens der Versuchstiere ist (ohne Versuchsabbruch) unmöglich.

Die in der biologischen Grundlagenforschung für spezielle Fragestellungen eingesetzten Verfahren registrieren durchweg unspezifisch Geräusche und Vibrationen. Bei Aufbau der Versuchsanordnung in schall- und vibrationsarmen Kammern ist es möglich, gezielt die von den im Holz lebenden Insekten (Insektenlarven) erzeugten Geräusche und Vibrationen zu erfassen.

Aus DE-A-2 313 833 ist ein verfahren und eine Vorrichtung zur Untersuchung des Vorhandenseins von schädlichen Insekten bekannt. Das durch die Lebenstätigkeit der Insekten verursachte, mit dem menschlichen Ohr nicht wahrnehmbare Geräusch wird elektroakustisch verstärkt und die so gewonnene Information verwertet. Hierbei wird eine Vorrichtung verwendet, die aus einem elektroakustischen Fühler und Verstärker besteht. Dieses bekannte Verfahren beschränkt sich somit auf den bloßen Nachweis der Anwesenheit der Schadinsekten.

In US-A-4 671 114 wird eine Vorrichtung zur bloßen Feststellung der Anwesenheit von Schädlingen in landwirtschaftlichen Produkten beschrieben. Sie besteht aus einem Probenhalter mit einem schallaufnehmenden und schallverstärkenden Diaphragma, einem Mittel zur Schallweiterleitung, einem Wandler zur Überführung der Schallwellen in elektrische Signale sowie einem Mittel zur Ablesung und Erkennung der Signale.

Dem erfindungsgemäßen Verfahren liegt die Aufgabe zugrunde, die Anwesenheit und das Verhalten von in einem festen Substrat, vorzugsweise Holz lebenden Insekten und/oder -larven mit Hilfe einfacher Mittel zerstörungsfrei zu erkennen.

Die Aufgabe wird erfindungsgemäß dadurch gelöst, daß die Frequenzsignale der von den Insekten und/oder -larven erzeugten Substratvibrationen und/oder des von den Insekten und/oder -larven erzeugten Schalls, ggf. zusammen mit den aus der Umgebung stammenden Vibrations- oder Schallfrequenzsignalen (Störfrequenzsignale) nach erforderlichenfalls vorhergehender Verstärkung gemessen, das Signalgemisch unter Messung des analogen Eingangssignals in eine digital verwertbare Zahlenfolge umgesetzt, die Störfrequenzsignale ausgefiltert, das so typische Nutzsignal mit Referenz-Signalen, die für das Verhalten der betreffenden Schadinsekten und/oder -larven im festen Substrat charakteristisch sind, verglichen und das Ergebnis dieser Zuordnung automatisch, ausgewiesen wird.

Vor Durchführung des erfindungsgemäßen Verfahrens wird zunächst das Verhaltenrepertoire des Tieres durch Beobachtung unter möglichst natürlichen Bedingungen festgestellt. Zeitgleich mit den Beobachtungen erfolgt die Aufzeichnung der von dem Tier erzeugten Substratvibrationen und/oder Schallereignisse. Nach Festlegung des Verhaltensrepertoires werden die für jedes relevante Verhalten (Verhaltensmuster) charakteristischen Signale in Dauer, Form und Spektrum auf Gemeinsamkeiten untersucht. Diejenigen Signaleigenschaften, die ein Verhalten möglichst eindeutig beschreiben und es dabei optimal gegen die Signaleigenschaften der anderen Verhaltensmuster abgrenzen, werden als "Referenz-Vorgabe" festegelegt; die zu diesen Refenz-Vorgaben führenden Signalverarbeitungs-Schritte werden als "Auswertungs-Vorschrift" festgelegt. Jedem relevanten Verhalten aus dem Verhaltensrepertoire des Tieres werden sowohl "Referenz-Vorgabe" als auch "Auswertungs-Vorschrift" zugeordnet.

Das erfindungsgemäße Verfahren wird durch quasi-simultane Ausführung der Signal-Erfassung, der "Auswertungs-Vorschriften", der Abprüfung gegen die "Referenz-Vorgaben" und der Ergebnis-Ausgabe mit Hilfe der beanspruchten Vorrichtung realisiert; auf diese Art werden (auch in Signal-Gemischen) verhaltenstypische Muster mit sehr hoher Zuverlässigkeit erkannt und dem verursachenden Verhalten korrekt zugeordnet. Die Anwesenheit eines aktiven Tieres ist sofort nachzuweisen, und das aktuelle Verhalten des Tieres ist jederzeit abrufbar, da die Ergebnisse "on-line" zu Verfügung stehen.

Erfindungsgemäß kann anstelle der von den Tieren erzeugten Substratvibrationen der von ihnen erzeugte Schall, vorzugsweise Ultraschall, zur Erkennung ihrer Verhaltensmuster genutzt werden, falls eine berührungsfreie Ausführung des Verfahrens zweckmäßig ist.

Für Prüfumgebungen mit hohen Störpegel oder für sehr schwer zu unterscheidende Signale werden erfindungsgemäß sowohl die von den Tieren erzeugten Sustratvibrationen als auch der von ihnen erzeugte Schall vorzugsweise Ultraschall, zur Erkennung ihrer Verhaltensmuster genutzt. Die gleichzeitige Auswertung beider Signale erhöht die Zuverlässigkeit des erfindungsgemäßen Verfahrens, die Störanfälligkeit wird weiter reduziert.

Gemäß einer bevorzugten Ausführungsform des erfindungsgemäß beanspruchten Verfahrens werden im Frequenzbereich von 0,01 mHz bis 150 kHz die Frequenzsignale der von den Insekten und/oder -larven erzeugten Substratvibrationen und/oder des von den Insekten und/oder -larven erzeugten Schalls, ggf. zusammen mit den aus der Umgebung stammenden Vibrations- oder Schallfrequenzsignalen (Störfrequenzsignale), nach erforderlichenfalls vorhergehender Verstärkung gemessen und/oder aufgezeichnet, nach Ausfilterung der Störfrequenzsignale ausgewertet und anschließend mit einem oder mehreren im Frequenzbereich von 0,01 mHz bis 150 kHz, vorzugsweise von 100 Hz bis 15 kHz gewonnenen Referenzvorgaben, vorzugsweise Signalform oder Pegelhäufigkeit, die für das Verhalten der betreffenden Schadinsekten und/oder -larven im festen Substrat charakteristisch sind, verglichen und das Ergebnis automatisch anzeigt.

Gemäß einer besonderen Ausgestaltung des erfindungsgemäßen Verfahrens werden Verhaltensmuster ausgewertet, die als Reaktion der Tiere auf spezielle arteigene und/oder -fremde Vibrations- oder Schallereignisse erfolgen. Hierbei werden zunächst derartige Signale in geeigneter Form in das Substrat, vorzugsweise Holz übertragen und anschließend die Reaktionen der Prüftiere ausgewertet. Diese besondere Ausgestaltung findet vornehmlich Verwendung bei im Holz lebenden Insekten, die über artspezifische Kommunikationsmechanismen (z.B. Klopfsignale bei Termiten) verfügen. Hierbei werden vorteilhaft im Frequenzbereich von 1 mHz bis 150 kHz, vorzugsweise von 1 Hz bis 15 kHz liegende Vibrationsfrequenzsignale und/oder Schallfrequenzsignale übertragen.

Weitere Einzelheiten des erfindungsgemäßen Verfahrens sowie die erfindungsgemäße Vorrichtung zur Durchführung des Verfahrens werden anhand der beigefügten Zeichnungen näher beschrieben.

Hierbei zeigt:

Figur 1 die Ermittlung von Auswertungs-Vorschriften und Referenz-Vorgaben als Grundlage für die Ausführung des erfindungsgemäßen Verfahrens bei Verwendung der von den Tieren erzeugten Substratvibrationen und/oder Schalls.

Figur 2 das Ablaufschema des erfindungsgemäßen Verfahrens, das zugleich Funktionsprinzip für die erfindungsgemäße Vorrichtung zur Durchführung des Verfahrens ist, und

Figur 3 die erfindungsgemäße Vorrichtung zur automatischen Erkennung der Verhaltensmuster.

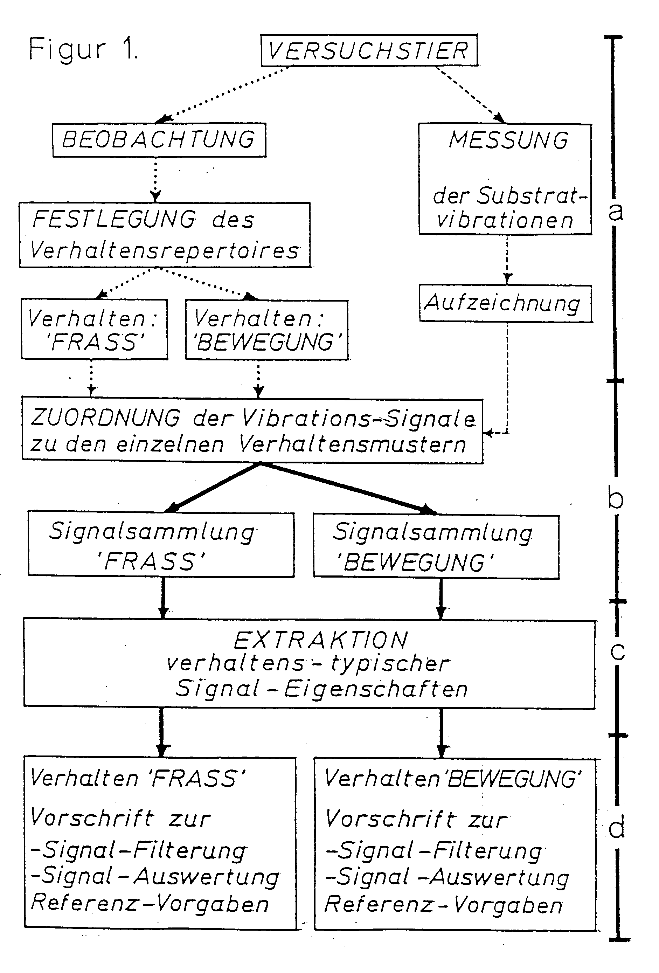

Fig. 1 zeigt schematisch den Ablauf der verfahrenstypischen Vorarbeiten, die für eine automatische Erkennung von Verhaltensmustern erforderlich sind.

Zunächst wird das Verhaltensrepertoire der gewünschten Tierart durch Beobachtung festgelegt (Fig. 1a, punktierter Ablauf). Hierzu werden die Tiere in der Regel bei Rotlicht, optimaler Temperatur und optimaler Feuchte in glasgedeckten Fraßgängen beobachtet und ihre Tätigkeiten protokolliert. Zeitgleich mit diesen Beobachtungen werden die von den Tieren erzeugten Substratvibrationen gemessen, aufgezeichnet und archiviert (Fig. 1a, gestrichelter Ablauf).

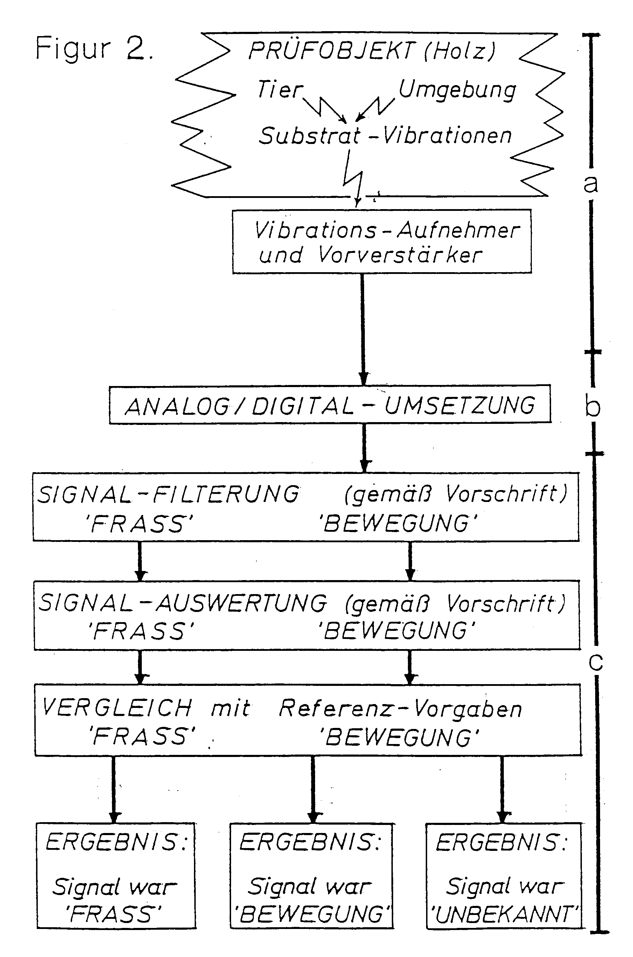

Nachdem das Verhaltensrepertoire der Tiere festgelegt ist (in Fig. 1 und 2 beispielhaft bestehend aus den zwei Verhaltensmustern "Fraß" und "Bewegung"), werden die archivierten Vibrationssignale gemäß Beobachtungtsprotokoll den Verhaltensmustern zugewiesen. So entsteht für jedes Verhaltensmuster eine Sammlung von Vibrationssignalen (Fig. 1b), die das Basisdatenmaterial für die weiteren Verfahrensschritte darstellt.

Ziel des nun folgenden Verfahrensschrittes (Fig. 1c) ist die Auffindung von Signalverarbeitungs-Vorschriften, mit denen die Signale eines Verhaltensmusters einerseits einwandfrei erkannt und andererseits optimal gegen die Signale der anderen Verhaltensmuster (und gegen Störgeräusche) abgegrenzt werden können. Zur Auffindung derartiger Signalverarbeitungsvorschriften können vielerlei Wege beschritten werden (W.WEHRMANN in "Korrelationstechnik", Ernst-Verlag 1980; H.SPÄTH in "Cluster-Analyse-Algorithmen", Oldenburg-Verlag 1977). Bewährt hat sich im Rahmen der vorliegenden Erfindung folgendes Vorgehen:

1. Frequenzanalyse aller Vibrationssignale eines Verhaltensmusters.

2. Auswahl eines Frequenzbandes, das in allen Signalen dieses Verhaltensmusters vertreten ist.

3. Bestimmung der "typischen" Signalform in diesem Frequenzband durch Filterung und Mitteilung aller Signale dieses Verhaltensmusters.

4. Festlegung von Kriterien für die Erkennung des Signalanfangs und -endes (H.NEY in "AUTOMATIC VOICEPRINT COPARSION BY COMPUTER. Int. Conf. Security through Science and Engineering, 1980, 121-130).

5. Signalvergleich aller (gefilterten) Signale dieses Verhaltensmusters gegen die "typische" Signalform nach dem Verfahren der dynamischen Optimierung (dynamic-programming), und Bestimmung der (zulässigen) Ähnlichkeitskoeffizienten innerhalb des Verhaltensmusters (H.SPÄTH 1977 a.a.0., H.SAKOE & S.CHIBA in "Dynamic Programming Algorithm Optimization for spoken word recognition. IEE Trans. on Acoustics, Speech and Signal Processing, 1978, Vol. ASSP-26, 43-49).

6. Signalvergleich aller (gefilterten) Signale der anderen Verhaltensmuster gegen die "typische" Signalform nach demselben Verfahren und Bestimmung der (unzulässigen) Ähnlichkeitskoeffizienten gegenüber den anderen Verhaltensmustern.

7. Festlegung des Vertrauensbereiches des Ähnlichkeitskoeffizienten für den Signalvergleich gegen die "typische" Signalform.

8. Sollte keine klare Abgrenzung des Vertrauensbereiches möglich sein, dann kann entweder die "typische" Signalform modifiziert (eliminieren von "Ausreißern") oder ein anderes Frequenzband ausgewertet werden.

9. Wiederholung der Punkte 1 bis 8 für die anderen Verhaltensmuster

Nach Abschluß dieses Verfahrensschrittes stehen genau definierte Verarbeitungsvorgaben und -vorschriften (Fig. 1d) fest, über die ein Vibrationssignal entweder einem der Verhaltensmuster zugeordnet oder als unbekannt abgewiesen wird. Die Zuverlässigkeit der Signalerkennung ist abhängig von den eingesetzten Verarbeitungsvorgaben und -vorschriften.

Der letzte, erfindungsgemäße Verfahrensschritt (Fig. 2) ist insbesondere die automatische Ausführung der Signalerkennung (gemäß den Verarbeitungsvorgaben und -vorschriften von Fig. 1d) und die Ergebnis-Ausgabe.

Figur 2 zeigt den Ablauf des erfindungsgemäßen Verfahrens und gleichzeitig das Funktionsprinzip der erfindungsgemäßen Vorrichtung zur Erkennung von Verhaltensmustern am Beispiel einer praxisbezogenen Anwendung (Schädlingsbefall-Feststellung im Dachstuhl).

Aus dem Holz gelangt ein Gemisch von "Stör"-Signalen (aus der Umwelt) und von "Nutz"-Signalen (vom Tier erzeugt) zum Vibrations-Aufnehmer und wird zunächst verstärkt (Fig. 2a).

Dieses Signal-Gemisch wird einem Analog/Digital-Converter zugeführt, der das analoge Eingangs-Signal mißt und in eine (digital verwertbare) Zahlenfolge umsetzt (Fig. 2b).

Ein Mikrocomputer-System (Fig. 2c) erfaßt diese Zahlenfolge und führt zunächst die Signal-Filterung gemäß den Vorgaben von Fig. 1d aus. Sofern die Rechenleistung der eingesetzten Hardware nicht für eine digitale Signal-Filterung ausreicht, erfolgt diese Signal-Filterung bereits vor dem Analog/Digital-Umsetzer.

Das so aufbereitete Signal wird (gemäß den Vorgaben von Fig. 1d) ausgewertet und mit den Referenz-Vorgaben (siehe Fig. 1d) verglichen. Konnte in dem Signal-Gemisch ein verhaltens-typisches Muster entdeckt werden, dann wird als Ergebnis das Verhalten (hier: "FRASS" oder "BEWEGUNG"), andernfalls "UNBEKANNT" o.ä. ausgegeben.

Auf diesem Wege kann im Fall der o.a. praxisbezogenen Anwendung (Schädlingsbefall-Feststellung im Dachstuhl) schnell, zuverlässig und zerstörungsfrei die Aussage gemacht werden, ob ein Schädlingsbefall vorliegt; darüberhinaus kann auch die Art des Schädlings (durch Mehrfachtests oder Verfahrens-Modifikationen) festgestellt werden.

Die erfindungsgemäße Vorrichtung kann als komplette Einheit an dem zu prüfenden Objekt angebracht bzw. befestigt werden. Nach einer anderen Ausführungsform können die Aufnehmer und Vorverstärker getrennt von Mikrocomputer und Analog/Digital-Converter am Prüfobjekt befestigt werden, wobei die aufgefangenen Signale über Verbindungsleitungen dem Mikrocomputer zugeleitet werden.

Mit Hilfe des erfindungsgemäßen Verfahrens läßt sich in einfacher Weise sowie ohne großen Zeitaufwand der Zeitverlauf der Wirksamkeit einer Holzschutzmittelbehandlung feststellen, sei es bei einer vorbeugenden Holzschutzbehandlung oder bei bereits von Schadinsekten und/oder -larven befallenem Holz. Anhand einer zu erfassenden Zeitwirkungskurve läßt sich der Abfall der Aktivität der Schadinsekten und/oder -larven feststellen.

Es ist somit nicht wie bisher erforderlich, bei Prüfversuchen eine Spaltung der befallenen Holzstückchen durchzuführen, um die Zahl der getöteten Schadinsekten und/oder -larven überprüfen zu können.

Darüberhinaus ist es möglich, mit Hilfe der erfindungsgemäßen Vorrichtung eine Dauerüberwachung von wertvollen Holzgegenständen, die in besonders gefährdeten Räumen oder Gegenden aufgestellt sind, durchführen zu können.

Dadurch, daß nach einer vorteilhaften Ausführungsform des erfindungsgemäßen Verfahrens auch die Lage der Schadinsekten und/oder -larven im befallenen Substrat, vorzugsweise Holz, zerstörungsfrei festgestellt werden kann, läßt sich eine gezielte Behandlung von ausgedehnten Objekten mit Holzschutzmitteln durchführen.

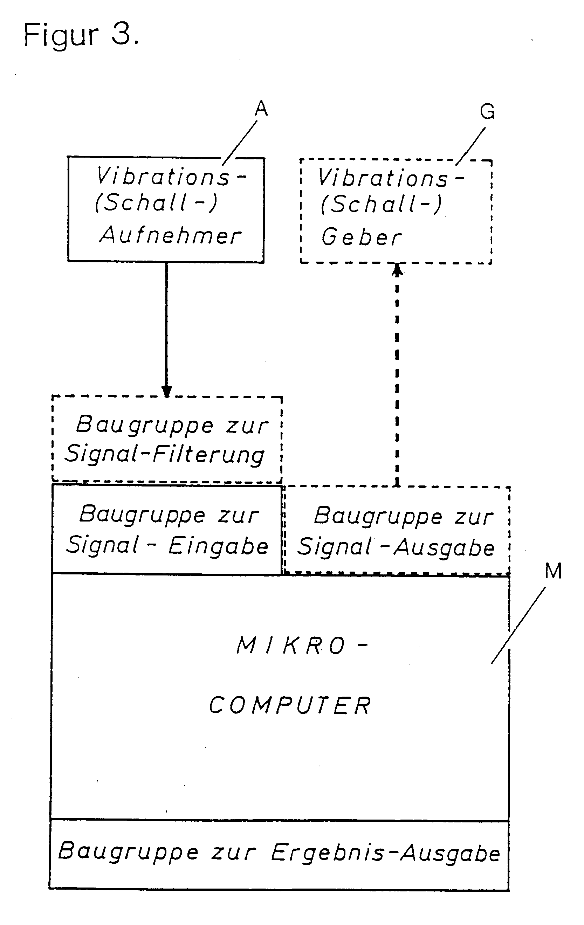

In Fig. 3 sind schematisch die Baugruppen der erfindungsgemäßen Vorrichtung zur Durchführung des Verfahrens dargestellt, wobei nicht alle dargestellten Baugruppen und Aufnehmer bzw. Geber zwingend vorhanden sein müssen; über Existenz bzw. Wegfall einzelner Komponenten entscheiden die Anforderungen, die (je nach Tier- und Holzart) an die Signal-Erkennung gestellt werden.

Darüber hinaus kann zum Beispiel die Baugruppe zur Signal-Filterung entfallen, wenn die Rechen-Leistung des Mikroprozessors eine digitale Signalfilterung erlaubt oder wenn diese Filterung von einem eigenen Signal-Prozessor ausgeführt wird.

Gemäß einer besonderen Ausführungsform des erfindungsgemäßen Verfahrens und der erfindungsgemäßen Vorrichtung ist es möglich, die Position von in einem festen Substrat (Holz) lebenden Insekten und/oder -larven in ihrem Substrat, vorzugsweise Holz, festzustellen. Das Verfahren nutzt die von diesen Tieren selbst erzeugten Substratvibrationen oder Schall zur Positionsbestimmung. Mit zwei oder mehreren Vibrations-Aufnehmern oder Schallmessern werden diese Vibrationen oder Schall an mindestens zwei gegenüberliegenden Seiten des Substrats abgegriffen und es wird die Zeitdifferenz gemessen, mit der die Signale an den Aufnehmern eintreffen. Aus den Zeitdifferenzen und unter Berücksichtigung der Ausbreitungsgeschwindigkeit der Signale im Holz läßt sich dr Aufenthaltsort des Tieres im Holz exakt bestimmen. Es wird quasi ein passives "Echolot"-Prinzip zur Positionsbestimmung benutzt.

**Patentansprüche**

1. Verfahren zur Erkennung der Anwesenheit von in einem festen Substrat, vorzugsweise Holz lebenden Insekten und/oder -larven, wobei deren spezifisches Verhalten oder Verhaltensmuster erforscht wird, dadurch gekennzeichnet, daß die Frequenzsignale der von den Insekten und/oder -larven erzeugten Substratvibrationen und/oder des von den Insekten und/oder -larven erzeugten Schalls, ggf. zusammen mit den aus der Umgebung stammenden Vibrations- oder Schallfrequenzsignalen, den sogenannten Störfrequenzsignale, nach erforderlichenfalls vorhergehender Verstärkung gemessen, das Signalgemisch unter Messung des analogen Eingangssignals in eine digital verwertbare Zahlenfolge umgesetzt, die Störfrequenzsignale ausgefiltert, das so typische Nutzsignal mit Referenz-Signalen, die für das Verhalten der betreffenden Schadinsekten und/oder -larven im festen Substrat charakteristisch sind, verglichen und das Ergebnis dieser Zuordnung automatisch ausgewiesen wird.

2. Verfahren nach Anspruch 1, dadurch gekennzeichnet, daß im Frequenzbereich von 0,01 mHz bis 150 kHz die Frequenzsignale der von den Insekten und/oder -larven erzeugten Substratvibrationen und/oder des von den Insekten und/oder -larven erzeugten Schalls, gemessen und/oder aufgezeichnet, nach Ausfilterung der Störfrequenzsignale ausgewertet und anschließend mit einer oder mehreren im Frequenzbereich von 0,01 mHz bis 150 kHz, vorzugsweise von 100 Hz bis 15 kHz gewonnenen Referenzvorgaben, vorzugsweise Signalform oder Pegelhäufigkeit, verglichen werden und das Ergebnis automatisch angezeigt wird.

3. Verfahren nach Anspruch 1 oder 2, dadurch gekennzeichnet, daß zur zusätzlichen Positionsbestimmung der in dem festen Substrat, vorzugsweise Holz lebenden Insekten und/oder -larven die Frequenzsignale der von ihnen erzeugten Substratvibrationen und/oder des von ihnen erzeugten Schalls an mindestens zwei gegenüberliegenden Seiten des Substrats abgegriffen und die Zeitdifferenz des Eintreffens dieser Signale gemessen wird.

4. Verfahren nach einem der Ansprüche 1 bis 3, dadurch gekennzeichnet, daß zur Auswertung zusätzlicher Verhaltensweisen der in dem festen Substrat, vorzugsweise Holz lebenden Insekten und/oder -larven arteigene und/oder artfremde zusätzliche Vibrationen und/oder Schall in das Substrat übertragen werden.

5. Verfahren nach Anspruch 4, dadurch gekennzeichnet, daß im Frequenzbereich von 1 mHz bis 150 kHz, vorzugsweise von 1 Hz bis 15 kHz liegende Vibrationsfrequenzsignale und/oder Schallfrequenzsignale übertragen werden.

6. Vorrichtung zur Durchführung des Verfahrens nach einem oder mehreren der Ansprüche 1 bis 5, dadurch gekennzeichnet, daß sie Aufnehmer zur Durchführung der Signal-Erfassung, der Signal-Auswertung und zur Ergebnisausgabe einen Mikrocomputer (M), einen oder mehrere (A) zur Messung der Vibrations- oder Schallsignale, einen bzw. mehrere Vorverstärker für diese Aufnehmer, einen Analog-Digital-Converter sowie aus Hardware umfaßt.

7. Vorrichtung nach Anspruch 6, dadurch gekennzeichnet, daß sie einen oder mehrere Geber (G) zur Erzeugung von Vibrations- oder Schallsignalen, einen oder mehrere Verstärker für diese(-n) Geber sowie Hardware für die Signal-Erzeugung aufweist.

**Claims**

1. Method for detecting the presence of insects and/or insect larvae living in a solid substrate, preferably wood, the specific behaviour or behaviour pattern of which is examined, characterised in that the frequency signals of the substrate vibrations produced by the insects and/or insect larvae and/or the sound produced by the insects and/or insect larvae are measured, following amplification if necessary, possibly together with the vibration or audio frequency signals coming from the environment, the so-called spurious frequency signals, the composite signal arising from the measurement of the analog input signal is converted into a digitally utilisable sequence of numbers, the spurious frequency signals are filtered out, the useful signal which is thus typical is compared with reference signals characteristic of the behaviour of the relevant insect pests and/or insect larva pests in the solid substrate and the result of this association is automatically displayed.

2. Method according to claim 1, characterised in that the frequency signals of the substrate vibrations produced by the insects and/or insect larvae and/or the sound produced by the insects and/or insect larvae are measured and/or recorded in the frequency range from 0.01 mHz to 150 kHz, evaluated after the spurious frequency signals have been filtered out and subsequently compared with one or more set reference values, preferably signal shape or statistical distribution, obtained in the frequency range from 0.01 mHz to 150 kHz, preferably from 100 Hz to 15 kHz, and the result is automatically displayed.

3. Method according to claim 1 or 2, characterised in that, in order to additionally determine the position of the insects and/or insect larvae living in the solid substrate, preferably wood, the frequency signals of the substrate vibrations produced by them and/or the sound produced by them are picked up on at least two opposite sides of the substrate and the time difference between the arrival of these signals is measured.

4. Method according to one of claims 1 to 3, characterised in that, in order to evaluate additional modes of behaviour of the insects and/or insect larvae living in the solid substrate, preferably wood, additional vibrations and/or sound which is/are peculiar and/or alien to the species is/are transmitted to the substrate.

5. Method according to claim 4, characterised in that vibration frequency signals and/or audio frequency signals in the frequency range from 1 mHz to 150 kHz, preferably from 1 Hz to 15 kHz, are transmitted.

6. Device for carrying out the method according to one or more of claims 1 to 5, characterised in that, in order to carry out the signal acquisition, the signal evaluation and to output the result, it comprises a microcomputer (M), one or more pick-ups (A) for measuring the vibration or audio signals, one or more preamplifiers for this/these pickup(s), an analog/digital converter and hardware.

7. Device according to claim 6, characterised in that it comprises one or more transducers (G) for producing vibration or audio signals, one or more amplifiers for this/these transducer(s) and hardware for the signal production.

**Revendications**

1. Procédé permettant de reconnaître la présence d'insectes et/ou de larves d'insectes vivant dans un substrat solide, de préférence du bois, après avoir étudié leur comportement spécifique (modèle de comportement), caractérisé en ce que les signaux de fréquences des vibrations du substrat, produites par les insectes et/ou les larves d'insectes et/ou des sons émis par les insectes et/ou les larves d'insectes éventuellement associés aux signaux de fréquences vibratoires ou sonores émanant de l'environnement (signaux de fréquences parasites) sont mesurés après amplification préalable en cas de nécessité, le mélange de signaux est transformé, après mesure du signal d'entrée analogique, en une séquence numérique exploitable, les signaux de fréquences parasites sont séparés par filtrage, le signal utile typique ainsi recueilli est comparé à des signaux de référence qui sont caractéristiques du comportement des insectes et/ou des larves d'insectes nuisibles concernés dans le substrat solide et le résultat de cette opération est identifié automatiquement.

2. Procédé selon la revendication 1, caractérisé en ce qu'on mesure et/ou enregistre, dans la plage de fréquences de 0,01 mHz à 150 kHz, les signaux de fréquences des vibrations du substrat, produites par les insectes et/ou les larves d'insectes et/ou le bruit produit par les insectes et/ou les larves d'insectes, on les interprète après séparation par filtrage des signaux de fréquences parasites et, finalement, on les compare a une ou plusieurs données de référence obtenues dans la plage de fréquences de 0,01 mHz à 150 kHz, de préférence de 100 Hz à 15 kHz, de préférence une forme de signal ou une fréquence de niveau, et on affiche automatiquement le résultat.

3. Procédé selon la revendication 1 ou 2, caractérisé en ce que, pour déterminer en outre la position des insectes et/ou larves d'insectes vivant dans un substrat fixe, de préférence du bois, des signaux de fréquences vibratoires et/ou sonores du substrat, produites par ces insectes sont captés au moins sur deux côté en regard du substrat et la différence de temps de propagation de ces signaux est mesurée.

4. Procédé selon l'une quelconque des revendications 1 à 3, caractérisé en ce que, pour déterminer d'autres comportements des insectes et/ou larves d'insectes vivant dans un substrat fixe, de préférence du bois, des vibrations et/ou des sons spécifiques et/ou étrangers supplémentaires sont transmis au substrat.

5. Procédé selon la revendication 4, caractérisé en ce que l'on transmet des signaux de fréquence vibratoires et/ou sonores qui se situent dans la plage des fréquences de 1 mHz à 150 kHz, de préférence de 1 Hz à 15 kHz.

6. Dispositif de réalisation du procédé selon l'une quelconque des revendications 1 à 5, caractérisé en ce qu'il comprend un micro-ordinateur (M) pour capter des signaux, interpréter les signaux et éditer les résultats, un ou plusieurs capteurs (A) pour mesurer les signaux vibratoires ou les signaux sonores, un ou plusieurs pré-amplificateurs pour ces capteurs, un convertisseur analogique/numérique ainsi qu'un matériel informatique.

7. Dispositif selon la revendication 6, caractérisé en ce qu'il présente un ou plusieurs transmetteurs (G) pour produire des signaux vibratoires et/ou sonores, un ou plusieurs amplificateurs pour ce ou ces transmetteurs ainsi qu'un matériel informatique pour la production des signaux.

Figur 1.

## Figur 2.

PRÜFOBJEKT (Holz)

Tier        Umgebung

Substrat - Vibrationen

a

Vibrations - Aufnehmer
und Vorverstärker

ANALOG / DIGITAL - UMSETZUNG     b

SIGNAL - FILTERUNG     (gemäß Vorschrift)
'FRASS'        'BEWEGUNG'

SIGNAL - AUSWERTUNG (gemäß Vorschrift)
'FRASS'        'BEWEGUNG'

c

VERGLEICH mit Referenz-Vorgaben
'FRASS'        'BEWEGUNG'

ERGEBNIS:

Signal war
'FRASS'

ERGEBNIS:

Signal war
'BEWEGUNG'

ERGEBNIS:

Signal war
'UNBEKANNT'

## Figur 3.